# EUROPEAN PATENT APPLICATION

(11) **EP 4 787 283 A1**
(43) Date of publication of application: **05.08.2026**
(21) Application number: 26155017.2
(22) Date of filing: 29.01.2026
(51) Int. Cl.: G06Q 50/163, G08B 21/22, F24F 120/00, F24F 120/10

(54) **METHOD AND SYSTEM FOR PREDICTING OCCUPANCY IN BUILDING PREMISES**

(30) Priority: 31.01.2025 IN 202541008398; 25.03.2025 EP 25166115
(71) Applicant: Siemens Schweiz AG, 8047 Zürich (CH)
(72) Inventor: Fechtig, Marco, 6300 Zug (CH); Jadhav, Abhishek, 400018 Mumbai (IN); Sharma, Atul, 400018 Mumbai (IN)
(74) Representative: Siemens Patent Attorneys

(57) **Abstract**

A method (100) and a system (200) for predicting occupancy in a building premises. The method (100) includes receiving, by a processor (204), access control data of the building premises for a first time interval of a day and receiving, by the processor (204), presence sensor data of the building premises for the first time interval of the day. Further, the method is characterized by predicting, by the processor (204), an occupancy of the building premises for a second time interval of the day, based on at least one of: previously determined correlation between the access control data and an occupancy, and previously determined correlation between the presence sensor data and the occupancy.

## Description

The present disclosure relates generally to predicting occupancy of a building premises, and more specifically to a method and a system, e.g. a building information model (BIM) system, for predicting occupancy in a building premises.

Occupancy of buildings is one of the main drivers for many activities associated with the buildings such as energy consumption, weather management, security management, etc. and is required for a utilization-based operation. However, conventional methods and systems associated cannot easily gather occupancy information from the buildings as it usually requires installation of specific hardware devices such as for example but not limited to people counting devices. Even the usage of other existing building data comes with some downsides. Access control data for example provides a good overview of people entering the buildings but does not provide any insights about when people are leaving the building. Motion sensors for example indicate an occupancy within the building but do not provide insights on how many people are present in the building premises.

Conventional method of addressing the above-mentioned problem is usage of people counting solutions to get occupancy data and deriving insights from that data. This requires installation of additional sensors which makes these solutions costly and non-scalable.

The present disclosure seeks to overcome the above-mentioned challenges by considering access control data and presence sensor data for first time interval of a day, to derive the occupancy of the building premises for a second time interval of the day. The proposed solution uses statistical model and predictive models to generate heat map to come up with the occupancy data. Further, the proposed solution includes monitoring the derived occupancy pattern over a period of time to determine an occupancy routine. This occupancy routine can be used for initiating various actions or services associated with the building such as controlling HVAC systems, energy management, providing instructions on occupancy of certain area, etc. Therefore, the proposed approach enhances the efficiency of the BIM system by predicting the occupancy of the building premises for a second time interval of the day and learning the same over an extended period of time.

The object of the present disclosure is achieved by a method for predicting occupancy in a building premises. The method includes receiving access control data of the building premises for a first time interval of the day and presence sensor data. The method also includes predicting an occupancy of the building premises for a second time interval of the day, based on at least one of: previously determined correlation between the access control data and an occupancy, and previously determined correlation between the presence sensor data and the occupancy. Then, the method includes causing to display the predicted occupancy of the building premises on a screen of a building information model (BIM) system or to control certain actions associated with the building, such as for example telling people to go to another room to save energy cost, etc. Further, the predicted occupancy of the building premises for the second time interval of the day may be monitored over a period of time to determine an occupancy routine. This occupancy routine can be further used to trigger specific actions at specific duration of a day or on specific days such as holidays, bridge-days, etc.

In one or more embodiments, the presence sensor data are received for the first time interval of the day. In further embodiments, the presence sensor data are received for a third time interval of the day.

In one or more embodiments, the occupancy is received from a occupancy sensor configured to detect occupancy within a specific area of the building premises and wherein the occupancy indicates a position of an occupant within a field of view of the occupancy sensor.

In one or more embodiments, the first model is a statistical model, and the second model is a predictive model.

In one or more embodiments, the method further includes determining a distinct day in a month and predicting a future occupancy of the building premises for a range of days comprising the distinct day based on the previously determined correlation between the access control data and an occupancy, and previously determined correlation between the presence sensor data and the occupancy.

In one or more embodiments, the occupancy of the building premises is provided for one of: an hour of the day and day of a week.

In one or more embodiments, the second model is trained using predictor variables and one or more response variable.

In one or more embodiments, the predictor variables comprise the presence sensor data and first card swipes to access the building premise.

In one or more embodiments, the response variable comprises the access control data of the building premises for the first time interval of the day considering a specific shift duration, over a period of time.

In one or more embodiments, the method further includes storing the predicted occupancy of the building premises for the second time interval of the day obtained over a period of time and the occupancy routine in a database of the BIM system.

In one or more embodiments, the method further includes determining optimal operating hours of the building premises based on the predicted occupancy, over a period of time.

In one or more embodiments, the method further includes triggering an automatic action associated with a plurality of services based on the predicted occupancy.

The object of the present disclosure is also achieved by a system for predicting occupancy in a building premises. The system includes a processor and a memory. The memory is coupled to the processor, where the memory includes instructions which, when executed by the processor, configures the processor to receive access control data of the building premises for a first time interval of a day and to receive presence sensor data of the building premises. The processor is also configured to predict an occupancy of the building premises for a second time interval of the day, based on at least one of: previously determined correlation between the access control data and an occupancy, and previously determined correlation between the presence sensor data and the occupancy.

The object of the present disclosure is further achieved by a computer program code which, when executed by a processor, cause the processor to carry out steps of the aforementioned method.

The object of the present disclosure is further achieved by a computer program product comprising computer program code which, when executed by a processor, cause the processor to carry out steps of the aforementioned method.

Still other aspects, features, and advantages of the disclosure are readily apparent from the following detailed description, simply by illustrating a number of particular embodiments and implementations, including the best mode contemplated for carrying out the disclosure. The disclosure is also capable of other and different embodiments, and its several details may be modified in various obvious respects, all without departing from the scope of the disclosure. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:
- FIG 1: is a flowchart representation of a method for predicting occupancy in a building premises, in accordance with one or more embodiments of the present disclosure;
- FIG 2: is a block diagram representation of a BIM system for predicting the occupancy in the building premises, in accordance with one or more embodiments of the present disclosure;
- FIG 3: is an exemplary depiction of a method for predicting the occupancy in the building premises, in accordance with one or more embodiments of the present disclosure;
- FIG 4: is an exemplary depiction of a heat map indicating correlation between total swipes and presence sensor data to occupancy, in accordance with one or more embodiments of the present disclosure;
- FIG 5: is an exemplary depiction of a heat map for occupancy distribution across hour of a day and day of a week, in accordance with one or more embodiments of the present disclosure;
- FIG 6: is an exemplary depiction of an average occupancy for an eight hours shift for working days, in accordance with one or more embodiments of the present disclosure;
- FIG 7A: is an exemplary depiction of a Box Plot version showing distribution of different days of week, in accordance with one or more embodiments of the present disclosure;
- FIG 7B: is an exemplary depiction of a box plot indicating a comparison between normal week and a week including a bridge day, in accordance with one or more embodiments of the present disclosure;
- FIG 8: is an exemplary plot indicating the predicted occupancy using the first swipes and the presence sensor data, in accordance with one or more embodiments of the present disclosure; and
- FIG 9: is an exemplary depiction of a plot indicating an occupancy trend over a period of time, in accordance with one or more embodiments of the present disclosure.

Various embodiment-s are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for predicting occupancy in a building premises are disclosed herein. In the following description, for the purposes of explanation, numerous specific details are set forth in order to provide a thorough understanding of the embodiments of the disclosure. It is apparent, however, to one skilled in the art that the embodiments of the disclosure may be practiced without these specific details or with an equivalent arrangement. In other instances, well-known structures and devices are shown in block diagram form in order to avoid unnecessarily obscuring the embodiments of the disclosure.

Conventional methods and systems for predicting the occupancy may require installation of additional proprietary hardware. As a result, the conventional methods and systems are very costly and reduces scalability. Therefore, with the proposed disclosure there is no requirement of any additional hardware to be installed to predict the occupancy within the building premises. As a result, the proposed disclosure provides a method of predicting the occupancy of the building premises which is highly cost effective and scalable.

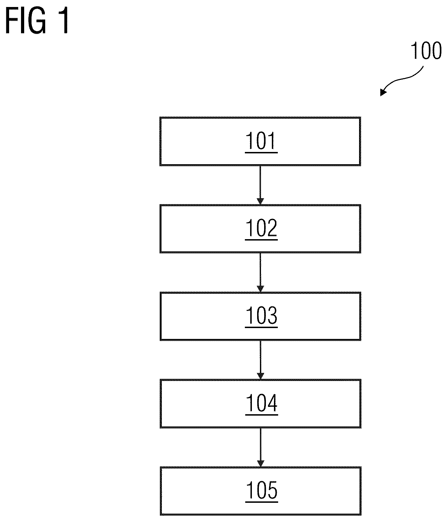

Referring now to FIG 1, illustrated is a flowchart of a method (as represented by reference numeral 100) for predicting occupancy in a building premises, in accordance with an embodiment of the present disclosure. As used herein, occupancy is occupying by humans within the building premises or a specific area within the building premises. This occupancy may be predicted for a portion of a day, a specific hour of a day, specific day of a week or a specific duration of a month or a year, etc. The prediction is provided based on understanding of historical presence sensor data and access control data of the building premises. Generally, the access control data or a swipe performed to access the building premises does not indicate whether the swipe was performed to enter the building premises or to exit the building premises. As a result, the consideration of just the swipe data to understand or predict the occupancy of the building premises may not provide efficient occupancy prediction results. The disclosure particularly mentions about the prediction of occupancy in the building premises. However, the proposed disclosure is not limited to the building premises alone and may be extended to closed premises which includes access control system and presence sensors. This approach includes using the data from the access control and the presence sensors to predict the occupancy. This approach enhances the efficiency of predicting the occupancy as there is no need to install additional propriety hardware and also makes the process cost effective.

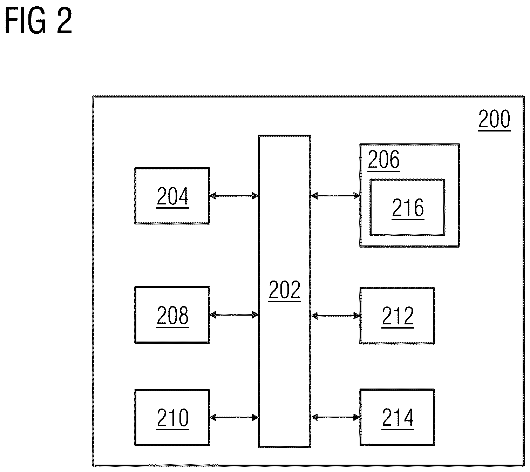

Referring to FIG 2, illustrated is a block diagram of a system 200 for predicting occupancy in the building premises, in accordance with one or more embodiments of the present disclosure. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 can be for example a Building information management (BIM) system and the terms BIM system and system may be used interchangeable throughout the specification. Further, the system 200 may be embodied as a computer-program product 200 programmed for performing the said purpose. The BIM system 200 may be incorporated in one or more physical packages. By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the BIM system 200 includes a communication mechanism such as a bus 202 for passing information among the components of the BIM system 200. The BIM system 200 includes a processor 204 and a memory 206. Herein, the memory 206 is communicatively coupled to the processor 204. In an example, the memory 206 may be embodied as a computer readable medium on which program code sections of a computer program are saved, the program code sections being loadable into and/or executable in a system to make the BIM system 200 execute the steps for performing the said purpose.

Generally, as used herein, the term "processor" refers to a computational element that is operable to respond to and processes instructions that drive the BIM system 200. Optionally, the processor includes, but is not limited to, a microprocessor, a microcontroller, a complex instruction set computing (CISC) microprocessor, a reduced instruction set (RISC) microprocessor, an exceptionally long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the BIM system 200.

Herein, the memory 206 may be volatile memory and/or non-volatile memory. The memory 206 may be coupled for communication with the processor 204. The processor 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The BIM system 200 may further include an interface 208, such as a communication interface (with the said terms being interchangeably used) which may enable the BIM system 200 to communicate with other systems for receiving and transmitting information. The communication interface 208 may include a medium (e.g., a communication channel) through which the BIM system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The BIM system 200 also includes a database 210. As used herein, the database 210 is an organized collection of structured data, typically stored in a computer system and designed to be easily accessed, managed, and updated. The database 210 may be in form of a central repository of information that can be queried, analysed, and processed to support various applications and business processes. In the BIM system 200, the database 210 provides mechanisms for storing, retrieving, updating, and deleting data, and typically includes features such as data validation, security, backup and recovery, and data modelling. The database 210 may include access control data of the building premises for a first half portion of a day captured over a period of time. The database 210 also includes predicted occupancy of the building premises for a second half portion of the day obtained over a period of time and the occupancy routine.

The BIM system 200 further includes an input device 212 and an output device 214. The input device 212 may take various forms depending on the specific application of the BIM system 200. In an example, the input device 212 may include one or more of a keyboard, a mouse, a touchscreen display, a microphone, a camera, or any other hardware component that enables the user to interact with the BIM system 200 in the metaverse environment. It is to be understood that, when reference is made in the present disclosure to the term "display" this refers generically either to a display screen on its own or to the screen and an associated housing, drive circuitry and possibly a physical supporting structure, of which all, or part of is provided for displaying information.

In the present BIM system 200, the processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein for managing the evacuation of the occupant from the building premise. In particular, the memory 206 includes a building management unit 216 to perform steps for managing the evacuation of the occupant from the building premise. Also, in the BIM system 200, the memory 206 may be configured to store the data associated with or generated by the execution of the inventive steps.

Referring to FIGS 1 and 2 in combination, the various steps of the method 100 as described hereinafter may be executed in the BIM system 200, or specifically in the processor 204 of the BIM system 200, for - predicting the occupancy in the building premises. For purposes of the present disclosure, the predicting the occupancy in the building premises present method 100 is embodied as a prediction algorithm for predicting the occupancy in the building premises. It may be appreciated that although the method 100 is illustrated and described as a sequence of steps, it may be contemplated that various embodiments of the method 100 may be performed in any order or a combination and need not include all of the illustrated steps.

In embodiments of the present disclosure, at step 101, the method 100 includes receiving access control data of the building premises for a first time interval of a day. The first time interval of the day can be for example a first half portion of a working day. Here, the access control data of the building premises is provided using card swipes to access the building premises. The cards hold essential data to grant or deny access and can be for example but not limited to proximity cards, contactless access card, magnetic stripe cards, hybrid cards, biometric access cards, smart cards, radio frequency identification (RFID) cards, Near Field Communication (NFC) cards, etc. The cards providing a secure and convenient way to manage entry or exit into buildings and secure areas. It is to be noted that the card swipes generally do not indicate whether the card is wiped to enter or exit the building premises. This results into an unknown state of the people leaving the building or even the rooms or areas. Also, the card swipes are only considered for the first half portion of the day and the proposed solution is used to predict the occupancy pattern in the building premises for the second half portion of the day (or second time interval of the day).

In embodiments of the present disclosure, at step 102, the method 100 includes receiving presence sensor data of the building premises for the first half portion of the day. The presence sensor data is received from a presence sensor configured to detect presence within a specific area of the building premises and the presence indicates a position of an occupant within a field of view of the presence sensor. The presence sensors can be loT devices which are connected via an IP network (IP) to the BIM system 200. In general, a sensor may convert a measurement into a signal, which can be interpreted by an observer, instrument and/or system. A sensor can be implemented as a special purpose device and/or can be implemented as software running on a general-purpose computer system.

The presence sensor data indicates the presence of the occupant based on a movement of the occupant and a static position of the occupant. The presence sensor data of the occupant based on the presence sensor is indicated using binary values as 1 or 0. Here the presence of the occupant is indicated as "1" whereas the absence of the occupant is indicated as "0". The presence sensor can be for example photoelectric sensors, proximity sensors, ultrasonic sensors, motion sensors, etc. However, the presence sensor does not give the actual count of the people present in the building premises as it only specifies whether the area in the range of the presence sensor is occupied or not.

In embodiments of the present disclosure, at step 103, the method 100 includes determining a correlation between the access control data and the occupancy data using a first model. As used herein the term "model" refers generally to a description or representation of a system. Examples of types of models and/or characteristics of models, without limitation, include lookup tables, linear, non-linear, deterministic, probabilistic, static, dynamic, and models having lumped parameters and/or distributed parameters. The first model in this case is a statistical model. The statistical model provides the extent to which two variables (i.e., the access control data and the occupancy data) are related which means that the two variables change together at a constant rate. The statistical model is used to derive the correlation heatmap. The correlation heatmap is a graphical tool that displays the correlation between multiple variables as a color-coded matrix. The correlation heatmap is like a colour chart that indicates the proximity of related different variables which are the access control data and the occupancy data.

In embodiments of the present disclosure, at step 104, the method 100 includes predicting an occupancy of the building premises for a second half portion of the day using a second model based on the correlation. Here, the second model is trained using predictor variables and response variable. The second model is a predictive model which is for example a multivariate regression model. The predictor variables include the presence sensor data, and the first card swipes to access the building premise. The response variable includes the access control data of the building premises for the first half portion of the day considering a specific shift duration, over a period of time. The multivariate regression model is a sophisticated technique used to determine the extent to which various independent variables are linearly related to multiple dependent variables. This linear relationship is established through the correlation between the variables (Here, the variables are the valid card swipes and the presence sensor data). The multivariate regression model is applied to the dataset to predict the behavior of the response variable based on its corresponding predictor variables. The multivariate regression model is a method used to measure the degree at which more than one independent variable (predictors) and more than one dependent variable (responses), are linearly related.

The second model also takes the correlation heat map as input and predicts the final occupancy of the building premises for the second half portion of the day or the later hours of the working day. The valid card swipes for the initial hours of working day combined with predicted occupancy from the predictive model for the later hours of working day has very close resemblance with the actual occupancy for that working day. The proposed solution then uses this transformed data along with holidays, weekdays, and bridge days information to provide occupancy patterns on hour of the day and day of the week level. Here, the bridge day is a day taken off from work to fill the gap between a holiday say for example a Thursday (or Tuesday) and the weekend.

In embodiments of the present disclosure, at step 105, the method 100 includes causing to display the predicted occupancy of the building premises on a screen of the BIM system 200. The predicted occupancy can be displayed on display systems placed within the building premises as well to provide occupancy pattern information to the occupants.

Further, in the embodiments of the present disclosure, the method includes determining presence of a distinct day in a month and predicting a future occupancy of the building premises for a range of days comprising the distinct day. For example, in an office premises the distinct day can be for example an optional holiday or day the school re-opens for children, which would most probably have low occupancy as the employees/occupants who have school going children would prefer to be present with the children on the first day of school. In another example, the distinct day can be a bridge day sandwiched between a public holiday and weekend. In such a scenario, the occupancy of the building premises would be low compared to a regular workday.

Further, in the embodiments of the present disclosure, the method includes monitoring the predicted occupancy of the building premises for the second half portion of the day, over a period of time and determining an occupancy routine based on the predicted future occupancy of the building premises. This predicted occupancy obtained over a period of time and the occupancy routine can be stored in the database 210. For example, the occupancy routine of the building premises such as a school, during festive season can be predicted well in advance based on the monitoring of occupancy during the various festive seasons. In another example, the occupancy routine may differ for different periods during the same day such as occupancy routine on weekday mornings, occupancy routine on weekday afternoons, and occupancy routine on bridge days mornings, etc.

Furthermore, the predicted occupancy can be used to determine the optimal operating hours of the building premises based on the predicted occupancy, over a period of time. For example, during summer solstice or winter solstice the optimal working hours can be determined based on monitoring of the occupancy patterns over a period of 2-3 years. This will not only help the occupants to enhance their productivity and ease of working but also help in saving energy at the building premises.

Further, in the embodiments of the present disclosure, the method includes based on the predicted occupancy and the occupancy routine there can be triggering of automatic action associated with a plurality of services such as for example but not limited to controlling of HVAC systems, water heating, building automation, building security, building lighting management, and charging infrastructure management. For example, when the occupancy pattern associated with a first floor of the building premises such as a college lecture hall, is predicted to be low during the second half of the day, then the occupants may be notified with a message to their mobile device to move to an alternate floor so that the energy saving can be initiated by switching off lighting and HVAC systems associated with the first floor. In another example, based on the predicted occupancy pattern there can be notification sent to a cafeteria service for the services to be provided for the predicted occupancy.

Therefore, the proposed disclosure predicts the occupancy of the building premises for the second half portion of any day based on the valid card swipes of the first half portion of the day and the presence sensor data for the same premises. The predicted occupancy can then be further monitored over a period of time to determine the occupancy trend or pattern, which can be used for various purposes. As a result, the proposed solution eliminates the uncertainty associated with card swipes which are not identified as either entry card swipes or exit card swipes which makes the prediction inaccurate.

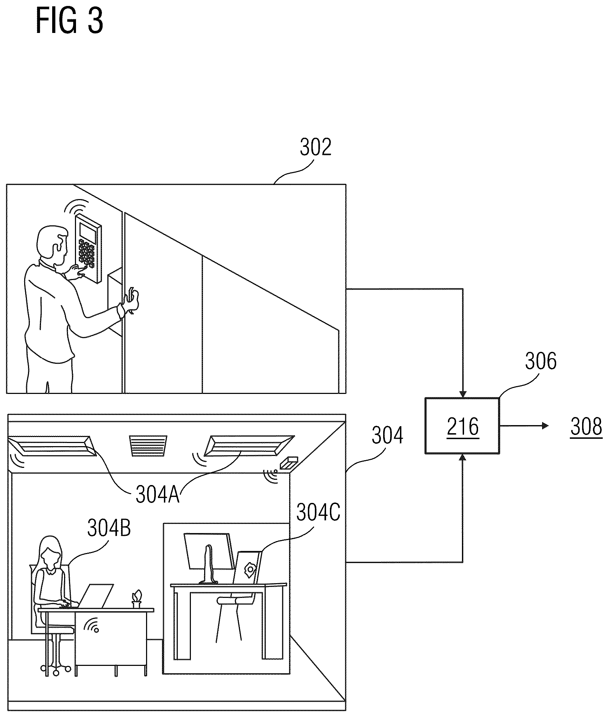

FIG 3 is an exemplary depiction of a method for predicting the occupancy in the building premises, in accordance with one or more embodiments of the present disclosure. Referring to the FIG. 3, at step 306, the building management unit 216 of the BIM system 200 receives the access control data (step 302) and the presence sensor data (at step 304) of the building premises for the first half portion of the day. Here, the presence sensors indicated by 304A identify the presence of the person in 304B and absence of the person in 304C. The presence sensor indicates the presence of the person using binary values as 1 or 0. Here the presence of the person in 304B is indicated as "1" whereas the absence of the person in 304C is indicated as "0".

Further, at step 308, the building management unit 216 predicts the occupancy of the building premises for the second half portion of that day using the predictive model based on the correlation between the access control data and the occupancy data. Then, the building management unit 216 causes to display the predicted occupancy of the building premises on the screen of the BIM system 200 or a public display system to provide visibility to the users for information purpose. The predicted occupancy can also be used to provide certain services to the building premises such as for example cafeteria services, sanitation services, banking services, etc.

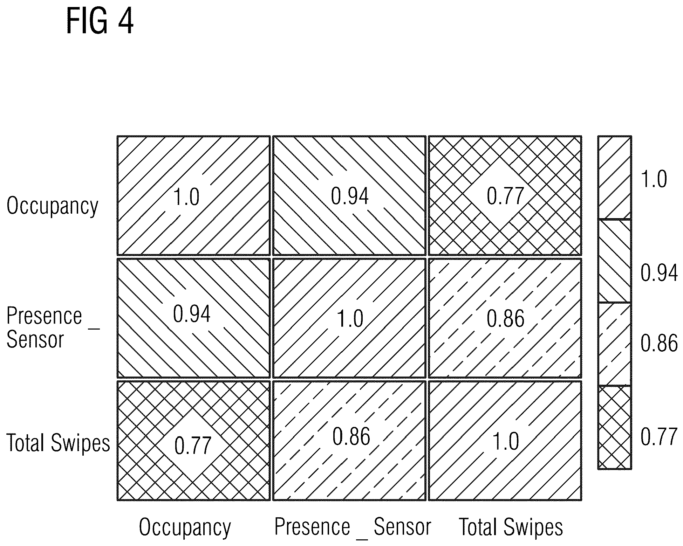

FIG 4 is an exemplary depiction of a heat map indicating correlation between the total swipes and the presence sensor data to occupancy, in accordance with one or more embodiments of the present disclosure. Referring to the FIG. 4, the correlation heatmap is a graphical tool that displays the correlation between multiple variables as a color-coded matrix. It is like a color chart that shows how closely related different variables are. In the correlation heatmap, each variable is represented by a row and a column, and the cells show the correlation between them. The color of each cell represents the strength and direction of the correlation, with darker colors indicating stronger correlations. The correlation heatmap is a heatmap that shows a 2D correlation matrix between two discrete dimensions, using colored cells to represent data from usually a monochromatic scale. The values of first dimension appear as rows of the table while of second dimension as a column. The color of the cell is proportional to the number of measurements that match the dimensional value.

However, in the FIG. 4 the strength and direction of the correlation is indicated using the cell value and different filling patterns, in place of colors. Positive correlations (when one variable increases, the other variable tends to increase) are usually represented by warm colours, such as red or orange. Negative correlations (when one variable increases, the other variable tends to decrease) are usually represented by cool colours, such as blue or green.

The correlation heal map is an effective visual tool for discerning the strength and direction of relationships between the total valid card swipes, the presence data and the occupancy of the building premises. From the FIG. 4, the color and values of each cell indicates the strength and direction of the correlation between the total valid card swipes. The higher values beyond 0.5 are generally indicated with darker colors are representative of stronger correlations, while values lower than 0.5 indicated with lighter colors are representative of weaker correlations. Here, the correlation between the presence sensor data and the occupancy is 0.94, the correlation between the presence sensor data and the total swipes is 0.86, and the correlation between the occupancy and the total swipes is 0.77. Further, this correlation data is provided to the predictive model which then predicts the occupancy of the building premises.

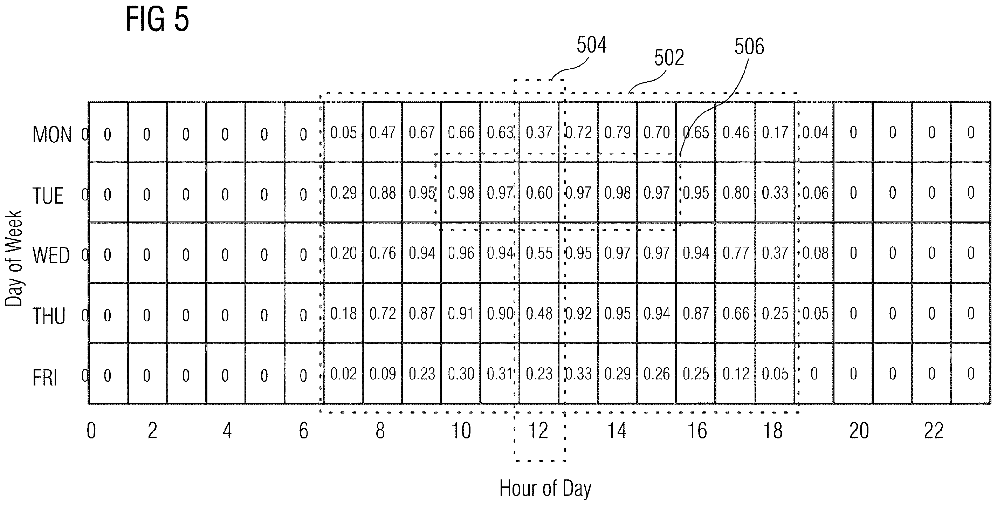

FIG 5 is an exemplary depiction of a heat map for occupancy distribution across hour of a day and day of a week, in accordance with one or more embodiments of the present disclosure. Referring to the FIG. 5, in conjunction with the FIG. 4, the heat map for occupancy distribution across hour of a day and day of a week is provided. The values provided within the block indicated as 502 is the occupancy distribution of the building premises during the workweek from Monday to Friday during the work shift starting from morning 7.00AM to evening 7.00PM.

Further, it may be observed that 506 indicates the period between 10.00AM to 4.00PM on a Tuesday which has the highest predicted occupancy rates. This also includes the possible lunch time which has the highest occupancy rate of 0.6. The lunch time throughout the week is indicated by 504. Here, the highest occupancy rate is at between 10.00 AM to 11.00AM and between 2.00PM to 3.00PM on the Tuesday. Further, it can be observed that the occupancy rates during the lunch breaks on Monday and Friday are the lowest. This indicates that the actual occupancy of the building premises is low during the beginning and ending of the week.

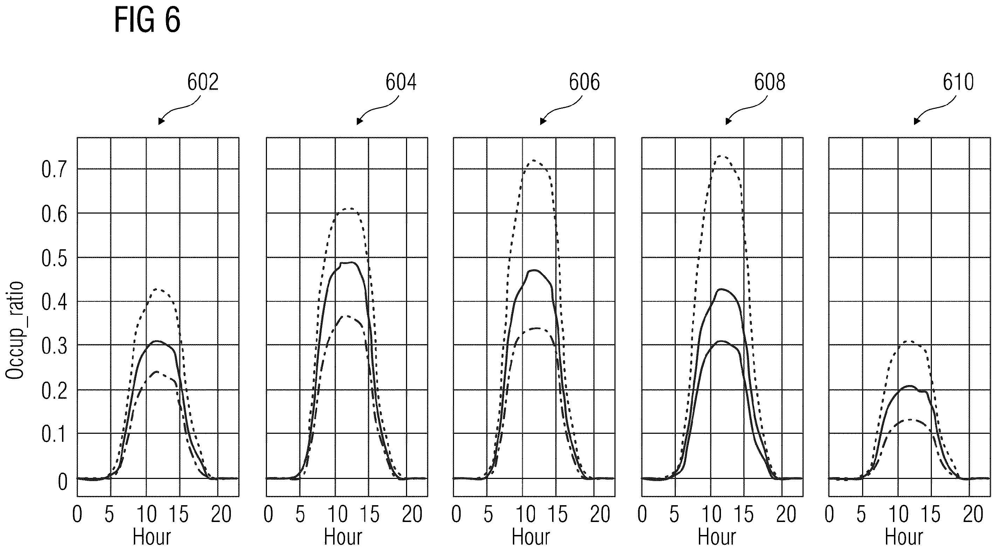

FIG 6 is an exemplary depiction of an average occupancy for an eight hours shift for working days, in accordance with one or more embodiments of the present disclosure. Referring to the FIG. 6, consider a building premises of an organization which provides hybrid model of working post-COVID 19. The proposed solution is used to derive the average occupancy for the eight hours shift for the various working days in of multiple weeks. At 602 the occupancy ratio for Monday, 604 Tuesday, 606 Wednesday, 608 Thursday and 610 for Friday is derived from the predicted occupancy data. The derived occupancy ratio is provided in table 1. below:

**Table. 1**

| **Step no.** | **Day of the week** | **Derived occupancy ratio** |
|---|---|---|
| 602 | Monday | 0.31 |
| 604 | Tuesday | 0.48 |
| 606 | Wednesday | 0.47 |
| 608 | Thursday | 0.42 |
| 610 | Friday | 0.21 |

Based on the derived occupancy ratio it can be observed that the highest occupancy generally is during mid-weekdays which are on Tuesdays, Wednesdays and Thursdays. Their derived occupancy ratio ranges between 0.4 to 0.5. This trend clearly indicates the hybrid model of working where the employees may choose to attend office premises on certain days of the week and the trend indicates that the employees generally attend office during the mid-weekdays as against the beginning of the week or the end of the week, workdays.

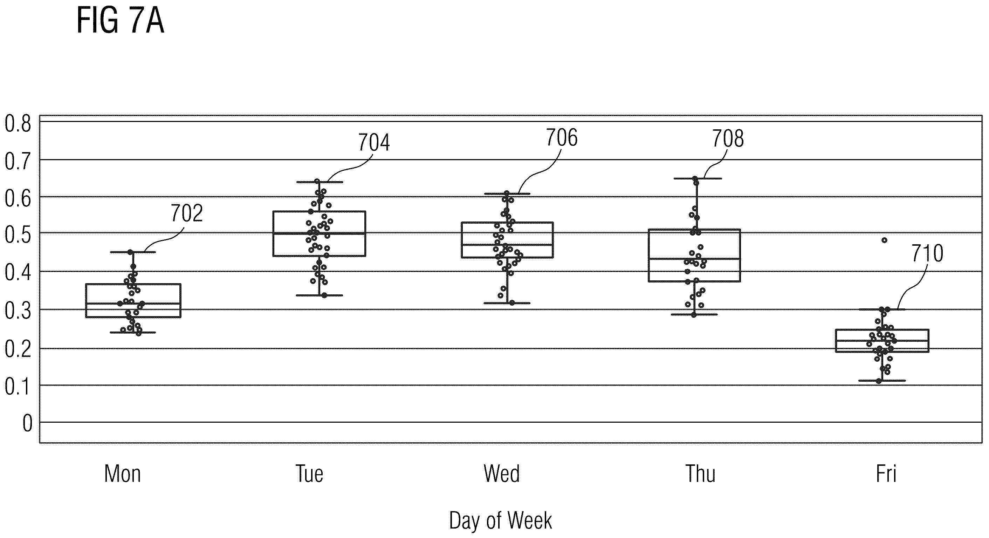

FIG 7A is an exemplary depiction of a Box Plot version showing distribution of different days of week, in accordance with one or more embodiments of the present disclosure. The proposed solution is used to derive various occupancy related insights such as for example the occupancy ratio for the work week. Referring to the FIG. 7A, the occupancy ratio for different days of the week (702-712) for over a period of time is derived for a specific building premises. It can be observed that the highest occupancy ratio is predicted during the mid-weekdays i.e., Tuesday to Thursday (704, 706 and 708).

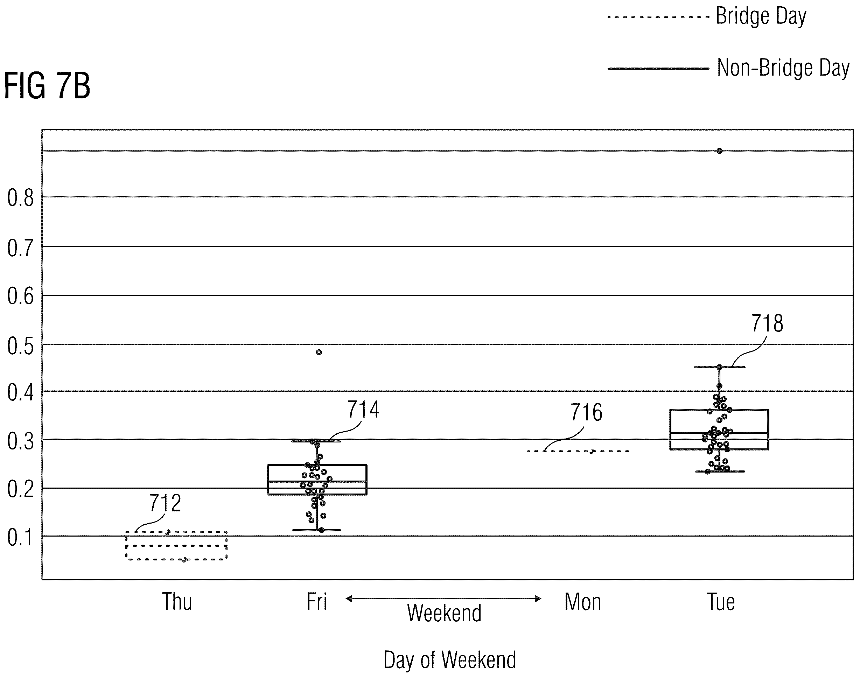

FIG 7B is an exemplary depiction of a box plot indicating a comparison between normal week and a week including a bridge day, in accordance with one or more embodiments of the present disclosure. Referring to the FIG. 7B in conjunction with the FIG. 7A, the occupancy ratio of bridge days 712 and 716 is observed to be the lowest. This trend is observed over a long period of time such as 1 year. However, the non-bridge days like 714 and 718 have higher occupancy than the bridge days (712 and 716). But the occupancy ratio of the non-bridge days is lower when compared to the normal workweek (702-710) without any bridge days, as shown in the FIG. 7A.

The various occupancy insights can be derived based on the predicted occupancy of the building based on the proposed solution. Further, the derived occupancy insights may be used for planning of the building asset management, determining operation schedule, allocation and saving of resources, providing various services, etc.

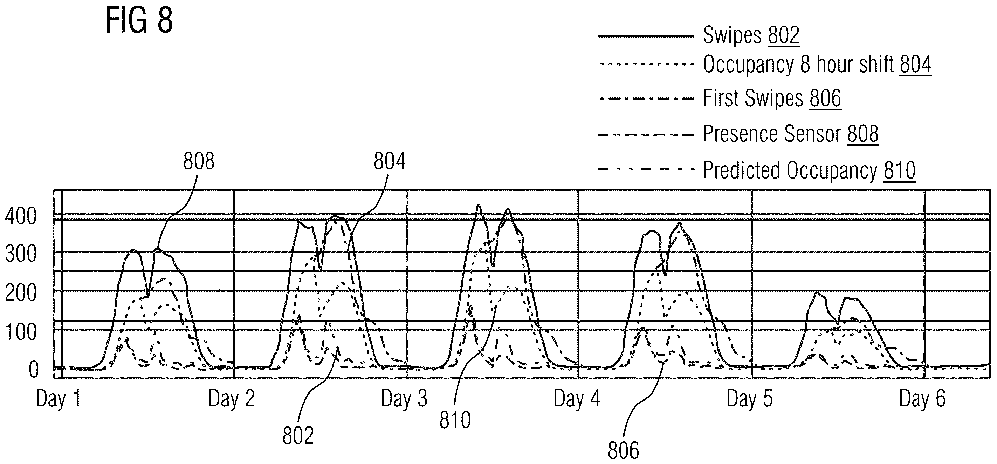

FIG 8 is an exemplary plot indicating the predicted occupancy using the first swipes and the presence sensor data, in accordance with one or more embodiments of the present disclosure. Referring to the FIG. 8, consider the predicted occupancy for a 5-day work week. Here, various parameters are plotted to indicate the predicted occupancy pattern over a period of time. The parameters include card swipes 802, valid card swipes assuming an occupancy over an 8 hour shift 804, first swipes of the card for the day 806, presence sensor data 808 and the final predicted occupancy 810. It is assumed that the first swipes before a certain duration of time such as for example the first swipes before 11.00am in the morning are the swipe to enter the building premises. Since the proposed solution assumes the 8-hour shift, the exit swipes are determined by taking the entry swipes and adding an 8hour to the time of the entry swipes. For example, if the entry swipe is at 9.00 AM, then the exit swipe is calculated as 17.00 PM. However, the valid card swipes assuming the occupancy over an 8 hour shift 804 cannot be taken as-is for the occupancy of the building premises in the second half of the day.

The multivariate regression model which receives the inputs of the card swipes, the presence sensor data and the historic pattern of the target variable 804 up to the first half of the day, to be able to predict the occupancy of the building premises for the second half of the day. The multivariate regression model is a trained model which is trained with the data associated with 804 for the first half portion of the day, where the data is considered for a very long period of time such as one year. The one-year data provides various indications to the multivariate regression model such as seasonality during a specific day of a week, festive season, etc.

Further, it can be observed that the 810 follows the pattern of 804 up to the first half of the day, example 12.00pm. Beyond the first half of the day, 810 is the actual predicted occupancy of the building premises by the regression model of the proposed solution.

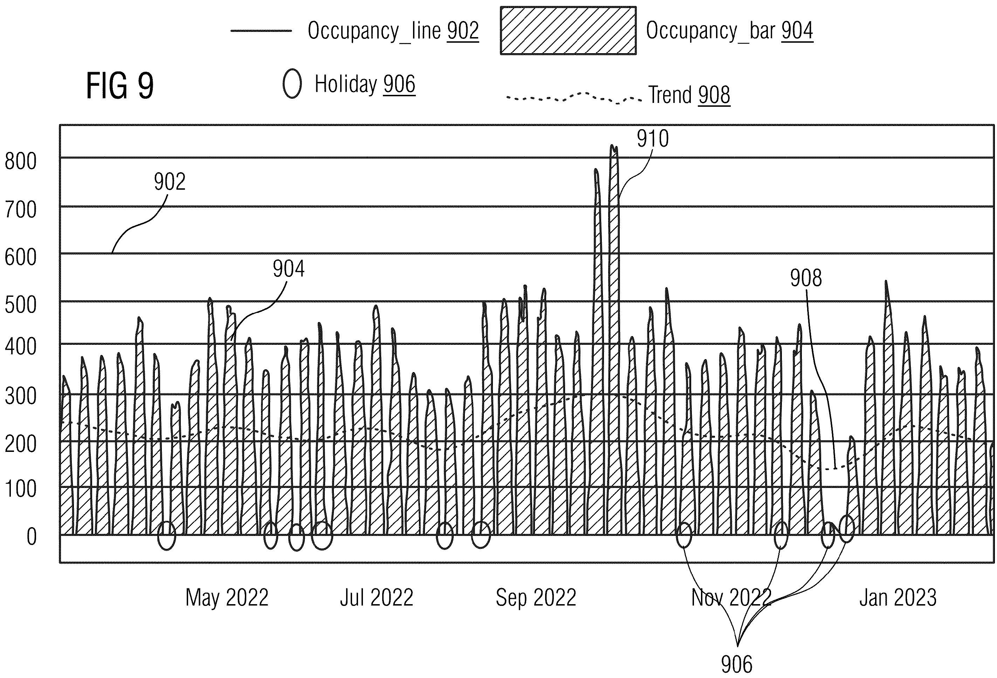

FIG 9 is an exemplary depiction of a plot indicating an occupancy trend over a period of time, in accordance with one or more embodiments of the present disclosure. Referring to the FIG. 9, the graph plot shows the occupancy trend of a specific building premises captured by the proposed solution over a period of time. Here, 904 occupancy bar indicates the predicted occupancy pattern for the second half portion of the day, for a particular day of a particular month with respect to 902 the occupancy line indicating the count of people in the building premises.

Further, from the plot it can be observed that the various dips or points marked as 906 indicates there is no count of people in the building. This implies that the specific day must be a holiday and hence there are no people in the building premises. The proposed solution then derives the occupancy trend, or the occupancy routine based on the occupancy of the building premises over a period of time. Which is indicated by 908. The trend can be used to determine pattern of various services at the building premises such as water supply, cafeteria, power consumption, sanitary services, etc.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

## Claims

1. A method (100) for predicting occupancy in a building premises, the method (100) comprising:
receiving, by a processor (204), access control data of the building premises for a first time interval of a day;
receiving, by the processor (204), presence sensor data of the building premises; and **characterized by:**
predicting, by the processor (204), an occupancy of the building premises for a second time interval of the day, based on at least one of: previously determined correlation between the access control data and an occupancy, and previously determined correlation between the presence sensor data and the occupancy.

2. The method (100) of claim 1, wherein the occupancy is received from at least one occupancy sensor configured to detect occupancy within a specific area of the building premises and wherein the occupancy indicates a position of an occupant within a field of view of the at least one occupancy sensor.

3. The method (100) of claim 1 or 2, wherein the correlation between the occupancy and one of: the access control data and the presence sensor data is determined using a first model, and the occupancy of the building premises is predicted using a second model, wherein the first model is a statistical model and the second model is a predictive model.

4. The method (100) of any one of the preceding claims, further comprising:
determining, by the processor (204), a distinct day in a month; and
predicting, by the processor (204), a future occupancy of the building premises for a range of days comprising the distinct day based on the predicted occupancy of the building premises for the second time interval of the day.

5. The method (100) of any one of the preceding claims, wherein the occupancy of the building premises is provided for at least one of: a specific period of time of a day and a specific day of a week or a month.

6. The method (100) of any one of claims 3 to 5, wherein the second model is trained using predictor variables and at least one response variable.,

7. The method (100) of claim 6, wherein the predictor variables comprise presence sensor data and a first access activity of a specific user at the building premises.

8. The method (100) of any one of claims 6 or 7, wherein the response variables comprise the access control data of the building premises for the first time interval of the day considering a specific shift duration, over a period of time.

9. The method (100) of any one of claims 3 to 8, wherein the predictive model is a multivariate regression model.

10. The method (100) of any one of the preceding claims, further comprising:
monitoring the predicted occupancy of the building premises for the second time interval of the day, over a period of time; and
determining an occupancy routine based on the predicted occupancy of the building premises.

11. The method (100) of any one of the preceding claims, further comprising:
determining, by the processor (204), optimal operating hours of the building premises based on the predicted occupancy, over a period of time.

12. The method (100) of any one of the preceding claims, further comprising:
storing, by the processor (204), the predicted occupancy of the building premises for the second time interval of the day obtained over a period of time, the occupancy routine and the optimal operating hours of the building premises, in a database (210) of a system (200).

13. The method (100) of any one of the preceding claims, further comprising:
triggering, by the processor (204), an automatic action associated with a plurality of services based on the predicted occupancy.

14. A system (200) for predicting occupancy in a building premises, the system (200) comprising:
a processor (204); and
a memory (206) coupled to the processor (204), wherein the memory (206) comprises instructions which, when executed by the processor (204), configures the processor (204) to:
receive access control data of the building premises for a first time interval of a day;
receive presence sensor data of the building premises;
**characterized by:**
predict an occupancy of the building premises for a second time interval of the day, based on at least one of: previously determined correlation between the access control data and an occupancy, and previously determined correlation between the presence sensor data and the occupancy.

15. A computer program product, comprising computer program code which, when executed by a processor (204), cause the processor (204) to carry out one of the methods (100) of one of the claims 1 to 13.
